# EUROPÄISCHE PATENTANMELDUNG

(11) **EP 1 118 525 A2**
(43) Veröffentlichungstag der Anmeldung: **25.07.2001**
(21) Anmeldenummer: 00128678.0
(22) Anmeldetag: 29.12.2000
(51) Int. Cl.: B62B 5/00

(54) **Transportvorrichtung mit einer Identifikationsfläche**

(30) Priorität: 19.01.2000 DE 10002208
(71) Anmelder: Ludwig Gebhardt GmbH & Co. Betriebs KG, 93413 Cham (DE)
(72) Erfinder: Gebhardt, Max, 93413 Cham (DE)
(74) Vertreter: Bergmeier, Werner, Dipl.-Ing.

(57) **Zusammenfassung**

Eine Transportvorrichtung mit einer Bodenplatte (1) weist mehrere, insbesondere vier Laufrollen auf. Auf der Bodenplatte (1) ist eine schräg nach oben zeigende Identifikationsfläche (2), insbesondere eine Barcodefläche angeordnet. Die Identifikationsfläche (2) weist zu deren Schutz vor Beschädigung einen die Fläche (2) einfassenden erhöhten Rand (4) auf.

## Beschreibung

Die vorliegende Erfindung betrifft eine Transportvorrichtung mit einer Bodenplatte, die mehrere, insbesondere vier Laufrollen aufweist und die eine Identifikationsfläche, insbesondere eine Barcodefläche aufweist.

Aus der EP 0 950 599 A1 der vorliegenden Anmelderin ist eine gattungsgemäße Transportvorrichtung bekannt. Sie weist üblicherweise eine Bodenplatte aus Kunststoff, Holz und Metall auf. Meist sind Seitenwände auf der Bodenplatte befestigt, damit eine Vielzahl von Gütern auf der Transportvorrichtung befördert werden können. Die gattungsgemäße Transportvorrichtung weist an ihrer Bodenplatte eine schräg nach oben weisende Barcodefläche auf, welche sich als sehr vorteilhaft zum Identifizieren der Transportvorrichtung erwiesen hat. Durch die schräg nach oben weisende Barcodefläche wurde eine zuverlässige Logistiksteuerung mit automatischer Erkennung der Waren bzw. der Transportvorrichtung ermöglicht. Obwohl die Barcodefläche nach dem Stand der Technik geschützt unterhalb einer Seitenwand angeordnet ist, hat sich in Einzelfällen jedoch trotzdem erwiesen, daß der Schutz vor Beschädigung nicht immer ausreichend ist. Auch wenn die Seitenwand die Barcodefläche vor herabfallenden Gegenständen schützt, so ist insbesondere bei demontierter Seitenwand die Barcodefläche weitgehend ungeschützt vor Beschädigungen, beispielsweise durch die Reibung mehrerer Bodenplatten aneinander beim Stapeln dieser Bodenplatten aufeinander.

Um eine universell einsetzbare und robuste Transportvorrichtung zu erhalten, muß sie auch im Außenbereich einsetzbar und identifizierbar sein. Sie muß von einer Leseeinrichtung somit auch erkennbar sein, wenn die Identifikationseinrichtung naß ist.

Aufgabe der vorliegenden Erfindung ist es somit eine Transportvorrichtung zu schaffen, welche einen Schutz vor Beschädigung ihrer Identifikationsfläche auch in gestapeltem Zustand, d.h. mit abgebauten Seitenwänden aufweist und wobei die Identifikationseinrichtung auch in nassem Zustand lesbar ist.

Die Aufgabe wird erfindungsgemäß durch die Merkmale des Patentanspruchs 1 gelöst. Weist die Identifikationsfläche einen die Fläche einfassenden erhöhten Rand auf, so ist bei einer gleitenden Bewegung eines Gegenstandes über die Identifikationsfläche ein hervorragender Schutz der Identifikationsfläche vor Beschädigung gewährleistet. Ist auf der Identifikationsfläche ein Barcode aufgeklebt, welcher meist aus Papier oder einer Kunststoffolie besteht, so ist hierdurch ein Verkratzen oder Zerreißen des Barcodes weitgehend ausgeschlossen. Die Identifizierung der Transportvorrichtung ist somit auch nach einem mehrmaligen Aneinanderreiben von Gegenständen an der Identifikationsfläche noch sicher gewährleistet. Besonders vorteilhaft und in der besonderen Ausführungsform wesentlich ist, daß die Identifikationsfläche eine Wasserablaufeinrichtung aufweist. Vorteilhafterweise ist der Rand zum Ablauf von Wasser stellenweise unterbrochen. Durch diese vorteilhafte Ausbildung der Erfindung ist die Transportvorrichtung bestens geeignet um auch im Außenbereich eingesetzt zu werden. Falls die Transportvorrichtung beispielsweise durch Regen naß wurde, könnte es möglich sein, daß Wasser auf der Identifikationsfläche steht.

Hierdurch würde eventuell der Barcode verzerrt werden und zu falschen Identifikationsergebnissen führen. Im Extremfall wäre er gar nicht mehr lesbar. Insbesonders im Winter wäre es möglich, daß die Fläche durch eine Eisschicht ebenfalls nicht mehr identifizierbar ist. Durch die Unterbrechung in dem Rand wird einerseits die Beschädigung der Identifikationsfläche zuverlässig vermieden und andererseits aber doch das Ablaufen von Wasser ermöglicht, so daß das Wasser nicht im Bereich der Identifikationsfläche zum Stehen kommt.

Besonders vorteilhaft ist es, wenn die Unterbrechung am unteren Rand vorgesehen ist. Dies erlaubt im Gegensatz zu einer möglichen seitlichen Unterbrechung des Randes, daß das Wasser auf einfache Weise vollständig abläuft. Es sind hierdurch auch mehrere Unterbrechungen möglich, so daß ein zuverlässiges Ablaufen des Wassers aus dem Bereich der Identifikationsfläche gewährleistet ist. Ist der Rand in Richtung zu der Unterbrechung hin geneigt ausgebildet, so wird das Ablaufen des Wassers zusätzlich unterstützt, da der Rand wie eine leicht geneigte Dachrinne wirkt. Das Wasser wird somit zu der Unterbrechung hingeleitet und ermöglicht durch ihre Strömung ein zuverlässiges und vollständiges Abfließen.

Ist der Rand in Richtung zu der Identifikationsfläche derart ausgebildet, daß er insbesondere von der Oberseite der Bodenplatte aus entformbar ist, so ist eine kostengünstige Herstellung der Bodenplatte ermöglicht, da auf einen Schieber in der Form verzichtet werden kann.

Um eine ausreichende Schutzwirkung zu gewährleisten ist vorteilhafterweise der Rand höher als die Oberfläche der Identifikationseinrichtung. Hierdurch wird sichergestellt, daß die gesamte Oberfläche der Identifikationseinrichtung geschützt ist. Bei der Auslegung der Höhe des Randes ist somit die Höhe der Identifikationseinrichtung zu berücksichtigen. Insbesondere wenn die Identifikationsfläche beispielsweise mehrfach mit Barcodes beklebt werden soll, so ist der Rand ausreichend hoch auszulegen, daß mehrere Barcodes übereinander noch von dem Rand überragt sind. Hierdurch wird auch nach einem mehrfachen Bekleben von Barcodestreifen übereinander der aktuelle Barcode vor Beschädigung geschützt.

Ist die Identifikationsfläche in einem Winkel von bis zu 90°, vorzugsweise etwa 20° bis 50°zur Waagerechten geneigt, so ist eine gute Erkennbarkeit der Identifikationsfläche von einem Lesegerät aus gewährleistet. Die Lesbarkeit der Identifikationseinrichtung, welche auf der Identifikationsfläche angeordnet ist, ist sowohl bei aufgebauter Seitenwand, als auch bei abgebauter Seitenwand möglich.

Zusätzlich oder alternativ zu den Unterbrechungen im unteren Rand kann vorgesehen sein, daß der untere Rand eine Schräge zur Identifikationsfläche hin aufweist. Die Schräge soll dabei so sein, daß sie einen Winkel von weniger als dem Winkel der Identifikationsfläche zur Waagerechten hat. Hierdurch wird ein Stau von Wasser vermieden, da die Schräge des Randes immer noch ausreichend ist, um ein Ablaufen des Wassers über den Rand hinweg zu erlauben. Andererseits ist der Rand so ausgelegt, daß er über die Identifikationsfläche hinausragt und somit einen Schutz der Identifikationsfläche bewirkt. Wesentlich ist hierbei, daß eine gewisse Neigung zur Waagerechten weiterhin besteht, so daß das Wasser über den Rand hinweg laufen kann.

Ist die Identifikationsfläche unterhalb einer Seitenwand angeordnet, so ist bei aufgebauter Seitenwand ebenfalls eine Schutzwirkung der Identifikationsfläche gewährleistet.

Ist die Wasserablaufeinrichtung ein in der Identifikationsfläche, aber außerhalb der Identifikationseinrichtung angeordnetes Loch, so ist eine alternative Ausführung geschaffen um einen Wasserstau auf der Identifikationsfläche zu vermeiden.

Ist die Identifikationsfläche zumindest teilweise, beispielsweise von einer durchsichtigen Fläche überdeckt, so daß in der dadurch entstehenden Tasche die Identifikationseinrichtung gehalten und /oder geschützt ist, so wird ein besonders zuverlässiger Schutz der Identifikationseinrichtung erzielt. Die Identifikationseinrichtung kann dann in die taschen- oder sackförmige Aufnahme gesteckt und bei Bedarf entfernt oder ausgetauscht werde.

Wenn die Identifikationseinrichtung mit der Bodenplatte fest verbunden, insbesondere beim Spritzen der Bodenplatte mit eingespritzt ist, so ist stets eine eindeutige Zuordnung der Bodenplatte zu bestimmten mit der Bodenplatte verknüpften Informationen möglich. Eine Beschädigung der Identifikationseinrichtung ist dann nahezu ausgeschlossen.

Ist die Identifikationseinrichtung mit der Bodenplatte abgedichtet verbunden, so ist ein besonders hoher Schutz der Identifikationseinrichtung gewährleistet.

Weitere Vorteile der Erfindung sind in den folgenden Ausführungsbeispielen beschrieben. Es zeigt:
- **Figur 1**: eine Draufsicht auf eine Identifikationsfläche,
- **Figur 2**: einen Schnitt durch eine Identifikationsfläche,
- **Figur 3**: einen Schnitt durch eine Identifikationsfläche eines weiteren Ausführungsbeispiels,
- **Figur 4**: einen Schnitt durch eine Identifikationsfläche eines weiteren Ausführungsbeispiels.

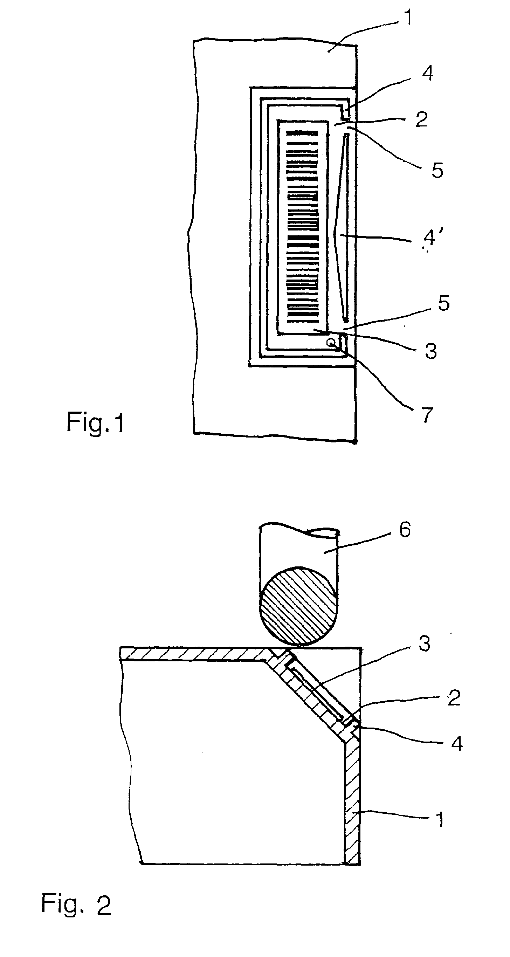

In Figur 1 ist eine Draufsicht auf einen Ausschnitt einer Bodenplatte 1 dargestellt. Die Bodenplatte 1 ist Teil einer nicht weiter dargestellten Transportvorrichtung, welche mehrere Laufrollen aufweist. Die Bodenplatte 1 hat im Bereich ihres äußeren Umfangs die dargestellte Identifikationsfläche 2 angeordnet.

Auf der Identifikationsfläche 2 ist im vorliegenden Ausführungsbeispiel ein Barcode 3 aufgebracht. Der Barcode 3 kann entweder aufgedruckt oder mit Papier- oder Kunststoffstreifen aufgeklebt sein. Die Identifikationsfläche 2 ist schräg zur Oberfläche der Bodenplatte 1 angebracht. Hierdurch ist das seitliche Erkennen des Barcodes 3 besonders vorteilhaft möglich insbesondere deshalb, da das Lesegerät nicht sehr tief am Boden angeordnet sein muß. Das Lesegerät kann daher beschädigungssicher in einer größeren Höhe installiert sein.

Die Identifikationsfläche 2 ist von einem Rand 4 und 4' vollständig umrandet. Der Rand 4 bzw. 4' steht über die Oberfläche des Barcodes 3 hinaus. Der Rand 4 bzw. 4' bewirkt somit, daß der Barcode geschützt und relativ zur Oberkante des Randes 4 bzw. 4' versenkt angeordnet ist. Hierdurch wird eine Beschädigung durch über die Identifikationsfläche 2 streichende Gegenstände weitgehend vermieden. Insbesondere beim Stapeln der Bodenplatten 1 übereinander wird somit einer Beschädigung des Barcodes 3 entgegengewirkt, da die Oberfläche des Randes 4 bzw. 4' ein über den Barcode 3 hinweggleiten von Gegenständen bewirkt. Dies hilft insbesondere beim Stapeln der Bodenplatten 1 übereinander, da weniger Sorgfalt aufgewendet werden muß um eine Beschädigung zu vermeiden..

Der Rand 4 bzw. 4' weist zwei Unterbrechungen 5 auf. Die Unterbrechungen 5 sind dabei derart ausgestaltet, das sie im wesentlichen flächengleich mit der Identifikationsfläche 2 sind. Hierdurch wird zuverlässig vermieden, daß sich Wasser innerhalb der Umrandung 4 staut und somit zu Identifikationsfehlern beim Lesen des Barcodes 3 führt. Außerdem wird durch das abfließende Wasser vermieden, daß sich Verschmutzung im Bereich des Barcodes 3 ansammelt und somit ein Lesen des Barcodes 3 erschwert wird.

Die Unterbrechung 5 kann anders als in dem hier dargestellten Ausführungsbeispiel ebenso in den seitlichen Bereichen des Randes 4 vorgesehen sein. Auch hierdurch wird ein Beschädigen des Barcodes 3 vermieden.

Ist genügend Platz für die Identifikationsfläche 2 auf der Bodenplatte 1 vorhanden, so ist es auch möglich die Identifikationsfläche 2 so lang auszubilden, daß der gesamte Barcode 3 im Bereich des mittleren Randes 4' angeordnet ist. Hierdurch ist der Barcode 3 über seine ganze Länge hinweg vor Beschädigung geschützt.

Um ein besonders gutes Abfließen des Wassers zu gewährleisten ist in dem vorliegenden Ausführungsbeispiel vorgesehen, daß der mittlere Rand 4' eine Ablaufschräge jeweils zur Unterbrechung 5 hin aufweist. Diese Ablaufschräge dient dazu, daß zuverlässig ein Stehen des Wassers innerhalb der Umrandung 4 bzw. 4' vermieden wird. Das Wasser läuft dabei stets in Richtung auf die Unterbrechung 5 und schwemmt besonders zuverlässig Verschmutzungen außerhalb des Bereichs der Umrandung 4, da die Strömungsgeschwindigkeit etwas größer als bei einem Ausführungsbeispiel ohne Ablaufschräge ist.

Zusätzlich zu den Unterbrechungen des Randes 4 ist ein Loch 7 vorgesehen. Regenwasser kann auch durch diese Öffnung aus dem Bereich der Identifikationsfläche abfliesen.

In Figur 2 ist ein Querschnitt durch eine Bodenplatte 1 und eine Identifikationsfläche 2 dargestellt. Im normalen Betrieb der Transportvorrichtung ist auf der Bodenplatte 1 eine Seitenwand 6 angeordnet. Vorteilhafterweise ist die Seitenwand 6 oberhalb der Identifikationsfläche 2 vorgesehen. Es schützt die Seitenwand 6 hierdurch zusätzlich vor Beschädigungen des Barcodes 3. Der Barcode 3 ist trotzdem von seitlich oben der Bodenplatte 1 durch ein nicht dargestelltes Lesegerät sichtbar. Wie aus der Darstellung der Figur 2 zu sehen ist, weist der Rand 4 eine größere Höhe auf als der Barcode 3. Hierdurch wird eine Beschädigung des Barcodes 3 durch über den Rand 4 hinweg gleitende Gegenstände zuverlässig vermieden. Dadurch daß der Rand 4 deutlich höher als der Barcode 3 ist, ist es möglich den Barcode 3 mehrfach zu überkleben und trotzdem noch ausreichend Schutz vor Beschädigung zu haben.

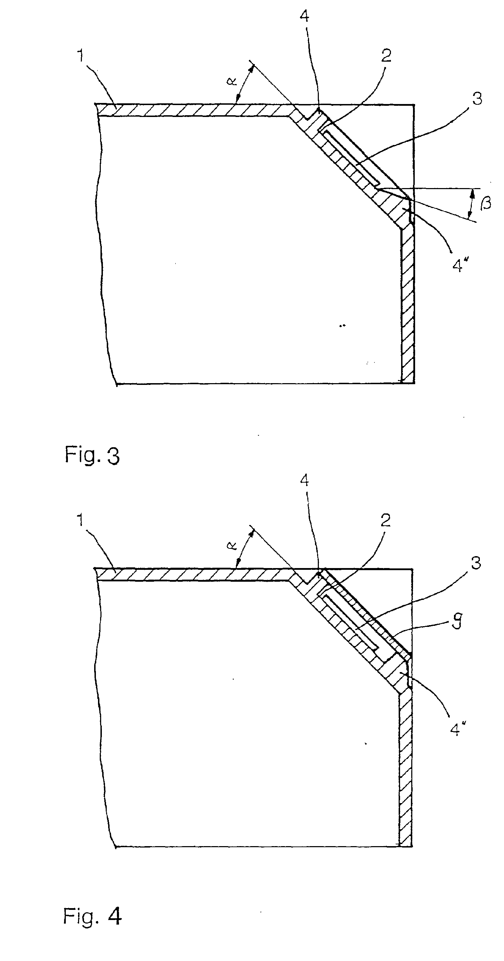

In Figur 3 ist eine weitere Variante der Umrandung 4 dargestellt. Die Identifikationsfläche 2 weist einen Winkel α zur Waagerechten der Bodenplatte 1 auf. Der Winkel α ist vorzugsweise geringer als 50% um eine gute Lesbarkeit des Barcodes 3 von seitlich oben zu ermöglichen. Um den Ablauf des gestauten Wassers zu ermöglichen weist der untere Rand 4 ebenfalls eine Schräge zur Oberfläche der Bodenplatte 1 auf. Die Schräge ist derart ausgestaltet, daß das Wasser gut von der Identifikationsfläche 2 abfließen kann. Der Winkel β der Neigung der inneren Wand des Randes 4 ist möglichst groß ausgebildet. Andererseits muß er jedoch kleiner als der Winkel α sein, um eine Erhöhung gegenüber der Identifikationsfläche 2 zu bewirken. Durch die Schräge des Randes 4 ist somit einerseits die Schutzfunktion des Barcodes 3 auf der Identifikationsfläche 2 gewährleistet. Andererseits ist aber auch ein Abfließen des Wassers von der Identifikationsfläche 2 möglich.

Selbstverständlich ist eine Kombination der einzelnen Ausführungsbeispiele möglich. So ist beispielsweise die Umrandung 4' der Figur 1 mit einer Schräge des Winkels β der Figur 3 ausführbar. Alternativ kann auch an Stelle der Unterbrechung 5 ein Rand 4" mit dem Winkel β vorgesehen sein. Hierdurch wird gegenüber der Unterbrechung 5 ein zusätzlicher Schutz des Barcodes 3 gewährleistet, wobei trotzdem das Abfließen des Wassers zumindest stellenweise ermöglicht ist. Das Loch 7 kann allein oder zusätzlich zu den anderen beschriebenen Ausführungsbeispielen vorgesehen sein. Die Identifikationseinrichtung kann auch beispielsweise auf Stegen angeordnet sein, damit das Wasser unterhalb der Identifikationseinrichtung ablaufen kann. Die Identifikationseinrichtung mit den erfindungsgemäßen Ausbildungen muß auch nicht an der Bodenplatte angeordnet sein. Sie kann auch an Einlegeböden, die an den Seitenwänden befestigt werden, vorgesehen werden.

Figur 4 zeigt einen Schnitt durch eine Identifikationsfläche eines weiteren Ausführungsbeispiels. Die Identifikationsfläche ist von einem vorzugsweise durchsichtigen Deckel 9 verschlossen. Es ist hierbei eine Art Tasche oder Sack gebildet, in dem sich die Identifikationseinrichtung befindet. Sie ist hierin besonders gut vor Beschädigung geschützt. Die Tasche kann ganz oder teilweise geschlossen sein, je nachdem, ob die Identifikationseinrichtung gewechselt werden muß oder nicht. Der Deckel 9 kann aufgeklebt oder auch entfernbar an der Identifikationsfläche angeordnet sein. Es kann auch vorteilhaft sein, wenn die Identifikationseinrichtung beim Spritzvorgang der Bodenplatte mit eingespritzt und dabei evtl. dicht umschlossen wird.

Die vorliegende Erfindung ist nicht auf die dargestellten Ausführungsbeispiele beschränkt. Neben Kombinationen der einzelnen Ausführungsbeispiele sind auch Abwandlungen möglich, welche den Umfang der vorliegenden Erfindung nicht verlassen. Auch sind selbstverständlich andere Identifikationseinrichtungen als Barcodes, beispielsweise elektronische Erkennungsmittel möglich.

## Patentansprüche

1. Transportvorrichtung mit einer Bodenplatte (1), die mehrere, insbesondere vier Laufrollen und eine insbesondere schräg nach oben zeigende Identifikationsfläche (2), beispielsweise eine Barcodefläche aufweist, dadurch gekennzeichnet, daß die Identifikationsfläche (2) zu deren Schutz vor Beschädigung einen die Fläche (2) einfassenden erhöhten Rand (4) aufweist.

2. Transportvorrichtung mit einer Identifikationsfläche (2), insbesondere einer Barcodefläche, dadurch gekennzeichnet, daß die Identifikationsfläche (2) zu deren Schutz vor Beschädigung einen die Fläche (2) zumindest teilweise einfassenden erhöhten Rand (4) und eine Wasserablaufeinrichtung aufweist.

3. Transportvorrichtung nach einem der vorherigen Ansprüche, dadurch gekennzeichnet, daß als Wasserablaufeinrichtung der Rand (4) stellenweise unterbrochen ist.

4. Transportvorrichtung nach einem der vorherigen Ansprüche, dadurch gekennzeichnet, daß die Unterbrechung (5) am unteren Rand (4) vorgesehen ist.

5. Transportvorrichtung nach einem der vorherigen Ansprüche, dadurch gekennzeichnet, daß der Rand (4) in Richtung zu der Unterbrechung (5) hin horizontal, vorzugsweise aber geneigt ausgebildet ist.

6. Transportvorrichtung nach einem der vorherigen Ansprüche, dadurch gekennzeichnet, daß der Rand (4) in Richtung zu der Identifikationsfläche (2) derart ausgebildet ist, daß er insbesondere von der Oberseite der Bodenplatte (1) aus entformbar ist.

7. Transportvorrichtung nach einem der vorherigen Ansprüche, dadurch gekennzeichnet, daß der Rand (4) höher als die Oberfläche der Identifikationseinrichtung (3) ist.

8. Transportvorrichtung nach einem der vorherigen Ansprüche, dadurch gekennzeichnet, daß die Identifikationsfläche (2) in einem Winkel (α) von bis zu 90°, vorzugsweise etwa 20° bis 50° zur Waagrechten geneigt ist.

9. Transportvorrichtung nach einem der vorherigen Ansprüche, dadurch gekennzeichnet, daß der untere Rand (4) eine Schräge zur Identifikationsfläche (2) hin aufweist, die in einem Winkel (β) von weniger als dem Winkel (α) der Identifikationsfläche (2) zur Waagrechten geneigt ist.

10. Transportvorrichtung nach einem der vorherigen Ansprüche, dadurch gekennzeichnet, daß die Wasserablaufeinrichtung ein in der Identifikationsfläche (2), aber außerhalb der Identifikationseinrichtung angeordnetes Loch (7) ist.

11. Transportvorrichtung insbesondere nach einem der vorherigen Ansprüche, dadurch gekennzeichnet, daß die Identifikationsfläche (2) zumindest teilweise überdeckt ist, so daß in der dadurch entstehenden Tasche die Identifikationseinrichtung gehalten und /oder geschützt ist.

12. Transportvorrichtung insbesondere nach einem der vorherigen Ansprüche, dadurch gekennzeichnet, daß die Identifikationseinrichtung mit der Bodenplatte (1) fest verbunden, insbesondere beim Spritzen der Bodenplatte (1) mit eingespritzt ist.

13. Transportvorrichtung insbesondere nach einem der vorherigen Ansprüche, dadurch gekennzeichnet, daß die Identifikationseinrichtung mit der Bodenplatte (1) abgedichtet verbunden.
